# FASCICULE DE BREVET EUROPEEN

(11) **EP 1 526 318 B1**
(45) Date de publication et mention de la délivrance du brevet: **02.05.2012**
(21) Numéro de dépôt: 04356167.9
(22) Date de dépôt: 15.10.2004
(51) Int. Cl.: F16L 37/084, F16L 37/34

(54) **Raccord rapide pour la jonction amovible de deux canalisations et utilisation d'un tel raccord**
Schnellkupplung für die lösbare Verbindung zweier Leitungen und Verwendung einer solchen Kupplung
Quick acting coupling for the disconnectable connection of two pipelines and use of such a coupling

(30) Priorité: 17.10.2003 FR 0312188
(43) Date de publication de la demande: 27.04.2005
(73) Titulaire: STAUBLI FAVERGES, Société Anonyme, 74210 Faverges (FR)
(72) Inventeur: Tiberghien, Alain-Christophe, 74320 Sevrier (FR)
(74) Mandataire: Myon, Gérard Jean-Pierre

(56) Documents cités:
- FR-A- 1 561 337
- FR-A- 2 063 800
- FR-A- 2 514 855
- US-A- 2 637 572
- US-A- 2 868 563
- US-A- 5 494 074

## Description

L'invention a trait à un raccord rapide pour la jonction amovible de canalisations de fluide sous pression, ainsi qu'à une utilisation d'un tel raccord.

Dans le domaine des raccords, il est connu, par exemple de FR-A-1 561 337, de prévoir dans chaque élément d'un raccord un clapet mobile chargé élastiquement vers une position d'obturation de l'écoulement à travers l'élément correspondant. Chacun de ces clapets est destiné à être déplacé, à l'encontre de la charge élastique qu'il subit, par une partie fixe de l'autre élément. On parle alors généralement de raccord à double obturation. De tels raccords présentent l'avantage de limiter au maximum les risques de fuite dans la mesure où l'élément mâle, d'une part, et l'élément femelle, d'autre part, ne sont ouverts que lorsque l'emmanchement est suffisamment avancé pour provoquer le déplacement des clapets précités. Ces raccords présentent l'inconvénient d'être relativement difficiles à manoeuvrer dans la mesure où le verrouillage en position emmanchée des éléments mâle et femelle est réalisé grâce à des billes montées dans l'élément femelle et prévues pour s'engager dans une gorge de retenue ménagée sur la surface radiale externe de l'élément mâle. Le contrôle en position de ces billes est effectué grâce à une bague ou un fourreau disposé autour du corps de l'élément femelle et qui doit être déplacé parallèlement à la direction d'emmanchement, c'est-à-dire parallèlement aux efforts d'écartement relatif des éléments mâle et femelle dus à la pression du fluide et aux moyens de charge élastique des clapets. Il en résulte que ces raccords connus sont parfois difficiles à manoeuvrer, tout particulièrement lorsque les canalisations auxquelles ils sont raccordés contiennent des fluides sous pression relativement élevée ou lorsque les bagues sont souillées par des produits gras.

US-A-5,494,074 divulgue un raccord dont les éléments mâle et femelle sont chacun pourvus d'un clapet dont des parties en saillie viennent en appui l'une sur l'autre, de telle sorte qu'il est créé un volume mort entre les clapets, ce qui, à l'ouverture du raccord, induit des fuites.

FR-A-2 063 800 divulgue un raccord rapide qui, dans le mode de réalisation des figures 4 et 5, comprend des éléments mâle et femelle équipés de clapets, alors qu'un élément tubulaire intercalé entre ces clapets définit un volume mort générant des égouttures ou des fuites, notamment à l'ouverture du raccord. En outre, la lame élastique en forme de U utilisée pour le verrouillage en configuration emmanchée du raccord est peu fiable.

C'est à ces inconvénients qu'entend plus particulièrement remédier l'invention en proposant un nouveau raccord rapide du type à double obturation dont la manoeuvre est facilitée.

Dans cet esprit, l'invention concerne un raccord rapide pour la jonction amovible de deux canalisations parcourues par un fluide sous pression, ce raccord étant constitué de deux éléments, mâle et femelle, aptes à s'emmancher axialement l'un dans l'autre et comprenant chacun un corps à l'intérieur duquel est mobile un clapet, une partie fixe de chaque élément étant apte à déplacer le clapet mobile de l'autre élément lors de leur emmanchement. Ce raccord est caractérisé en ce que l'élément femelle est pourvu d'un organe dans lequel est apte à être introduite une partie de l'élément mâle et qui est mobile en translation selon une direction radiale par rapport à l'axe d'emmanchement des éléments mâle et femelle, entre une première position dans laquelle cet organe autorise la séparation de ces éléments, et une seconde position où cet organe s'oppose à un retrait de l'élément mâle hors de l'élément femelle, en ce que lorsque les éléments mâle et femelle sont séparés, leurs parties fixes et leurs clapets mobiles respectifs définissent ensemble, respectivement dans l'élément mâle et dans l'élément femelle, des volumes complémentaires dont les surfaces en regard peuvent être en appui surfacique l'une sur l'autre et en ce que les surfaces précitées sont planes et globalement perpendiculaires à un axe longitudinal de l'élément correspondant et à l'axe d'emmanchement desdits éléments.

Grâce à l'invention, le contrôle de l'accouplement des éléments mâle et femelle peut être effectué grâce à l'organe mobile qui se déplace transversalement par rapport à la direction d'emmanchement. Il est à noter que l'invention prend le contre-pied d'un préjugé de l'homme du métier qui avait jusqu'à présent tendance à considérer qu'un raccord rapide à double obturation nécessitait un verrouillage axisymétrique, tel qu'obtenu avec des billes, sauf à risquer un défaut d'alignement des clapets et parties fixes prévus respectivement sur les éléments mâle et femelle. Il s'avère que l'organe mobile de retenue, qui exerce sur l'élément mâle un effort transversal, n'est pas incompatible avec le fonctionnement des clapets d'obturation.

En outre, l'invention permet de minimiser les dimensions d'un raccord conforme à l'invention dans la mesure où un organe à déplacement transversal nécessite moins de surface pour être efficacement manoeuvré par un utilisateur qu'un fourreau tel que celui connu dans l'état de la technique. En outre, l'effort de commande est exercé par l'utilisateur sur l'organe de commande perpendiculairement à l'axe du raccord, donc avec peu de risques de glissement.

Enfin, grâce à la possibilité d'appui surfacique des surfaces en regard des parties fixes et des clapets mobiles, on évite la création d'un volume mort entre les éléments mâle et femelle, un tel volume pouvant induire des fuites lors des manoeuvres du raccord.

Le raccord de l'invention permet donc d'atteindre efficacement une triple fonction de double obturation, de facilité de manipulation et d'étanchéité à la connexion/déconnexion, par une structure à la fois fiable, compacte et économique.

Selon des aspects avantageux mais non obligatoires, un raccord peut incorporer les caractéristiques suivant les revendications dépendantes.

L'invention concerne également l'utilisation d'au moins un raccord tel que précédemment décrit pour la création d'un circuit de circulation de fluide caloporteur en vue du refroidissement d'appareillages électriques ou électroniques. Cette utilisation tire partie du fait que les éléments constitutifs d'un raccord rapide conforme à l'invention peuvent être de dimensions relativement modestes et montés en grand nombre dans une armoire électrique.

L'invention sera mieux comprise et d'autres avantages de celle-ci apparaîtront plus clairement à la lumière de la description qui va suivre d'un mode de réalisation d'un raccord conforme à l'invention, donnée uniquement à titre d'exemple et faite en référence aux dessins annexés dans lesquels :
- la figure 1 est une coupe longitudinale d'un raccord conforme à l'invention, dans une première configuration où ses éléments mâle et femelle ne sont pas encore accouplés ;
- la figure 2 est une coupe analogue à la figure 1 à plus petite échelle, lors d'une étape intermédiaire d'accouplement des éléments mâle et femelle et
- la figure 3 est une coupe analogue à la figure 2, lorsque les éléments mâle et femelle sont accouplés.

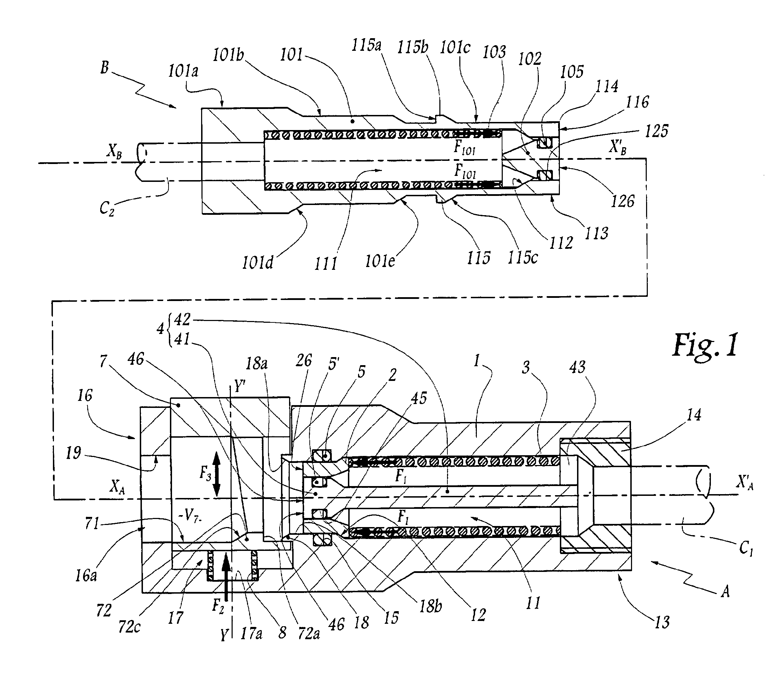

Le raccord représenté aux figures 1 à 3 comprend un élément femelle A et un élément ou embout mâle B raccordés respectivement à une canalisation amont C₁ et à une canalisation aval C₂. La canalisation amont C₁ est, elle-même, raccordée à une source de fluide sous pression non représentée.

Le corps 1 de l'élément femelle A est de forme externe cylindrico-conique à base circulaire, centré sur un axe X_{A}-X'_{A} qui est également l'axe longitudinal d'un conduit 11 interne au corps 1 et dans lequel est disposé un clapet 2 mobile selon l'axe X_{A}-X'_{A} par rapport au corps 1. Ce clapet 2 est destiné à venir en appui contre un siège 12 formé par une surface tronconique interne du corps 1. Le clapet 2 est soumis à un effort élastique F₁ exercé par un ressort 3, cet effort F₁ ayant tendance à le plaquer contre le siège 12. Le clapet 2 est centré sur une tête 41 d'un poussoir 4 dont la tige 42, qui est monobloc avec la tête 41, se prolonge jusqu'au niveau d'une partie arrière 13 du corps 1 où elle est maintenue en position grâce à trois pattes 43 disposées sensiblement à 120° l'une de l'autre autour de l'axe X_{A}-X'_{A} et coincées par une bague 14 vissée dans le corps 1 et sur laquelle se raccorde la canalisation C₁.

Le poussoir 4 est centré sur l'axe X_{A}-X'_{A}.

Deux joints toriques 5 et 5' sont respectivement prévus dans une gorge 15 prévue sur la surface radiale interne du corps 1 et dans une gorge 45 prévue sur la surface radiale externe de la tête 41, ces joints 5 et 5' étant destinés à assurer un contact étanche avec le clapet 2 lorsque celui-ci est en appui contre le siège 12.

On note 16 la partie avant du corps 1 dans laquelle est ménagé un orifice 16a d'introduction de l'élément mâle B. La surface 26 du clapet 2 et la surface 46 du poussoir 4 qui sont orientées vers l'orifice 16a sont globalement co-planaires dans la configuration de la figure 1 et perpendiculaires à l'axe X_{A}-X'_{A}.

Entre la tête 41 et l'orifice 16a, le corps 1 est pourvu d'un logement 17 dans lequel est disposé un bouton 7 chargé élastiquement par un effort F₂ exercé par un ressort 8 disposé entre le bouton 7 et le fond 17a du logement 17. Le déplacement du bouton 7 sous l'effet de l'effort F₂ est limité par une butée 18. Le bouton 7 est mobile en translation dans le sens de la double flèche F₃ à la figure 1, c'est-à-dire selon une direction Y-Y' perpendiculaire à l'axe X_{A}-X'_{A}. Il définit un volume V₇ dans lequel peut être introduite une partie de l'élément mâle B et qui s'étend de l'orifice 16a jusqu'à proximité des surfaces 26 et 46.

Au niveau de sa surface radiale interne 71 qui définit le volume V₇, le bouton 7 est pourvu d'une dent 72.

L'élément mâle B est pourvu d'un corps cylindrico-conique 101 à l'intérieur duquel est ménagé un conduit 111 de circulation de fluide sous pression, ce conduit étant en communication avec la canalisation C₂. Le corps 101 est centré sur un axe X_{B}-X'_{B} qui est également un axe de symétrie du conduit 111 et qui est prévu pour être aligné avec l'axe X_{A}-X'_{A} lorsque les éléments B et A sont emmanchés l'un dans l'autre. A l'intérieur du corps 101 est disposé un clapet 102 chargé élastiquement par un effort F₁₀₁ exercé par un ressort 103 et ayant tendance à ramener le clapet 102 vers une configuration de fermeture du débouché du conduit 111 du côté avant de l'élément B, le clapet 102 étant alors en appui sur un siège tronconique interne 112 formé par le corps 101.

Le clapet 102 est pourvu d'une gorge 125 dans laquelle est disposé un joint 105 destiné à venir en appui contre la surface cylindrique interne de l'extrémité avant du corps 101.

Le corps 101 est pourvu d'une collerette radiale externe 115 destinée à interagir avec la dent 72, d'une façon connue de FR-A-2 514 855.

La face avant 126 du clapet 102 et la face avant 116 du corps 101 sont globalement co-planaires et perpendiculaires à l'axe X_{B}-X'_{B} dans la configuration de la figure 1.

On note 113 la surface radiale externe du corps 101 au niveau de son extrémité avant et l'on note 114 l'arête de jonction entre cette surface 113 et la face avant 116, cette arête 114 étant circulaire.

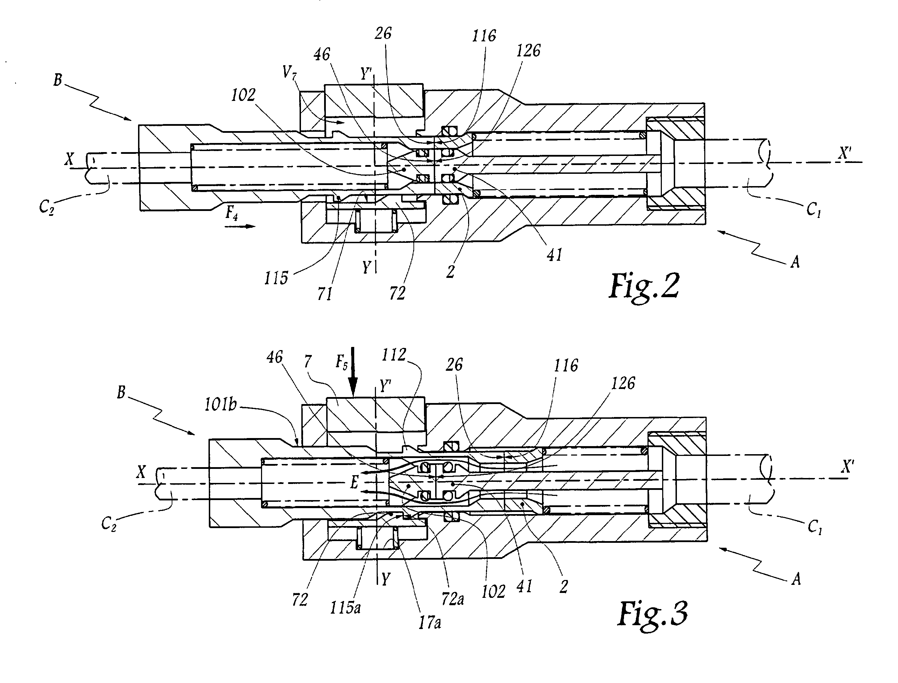

La face 115a de la collerette 115 qui est perpendiculaire à l'axe X_{B}-X'_{B}, est destinée à venir en appui contre une face 72a de la dent 72 qui est perpendiculaire à l'axe X_{A}-X'_{A}, comme représenté à la figure 3.

La surface radiale externe du corps 101 comprend trois surfaces cylindriques 101a, 101b et 101c dont le diamètre va décroissant vers l'avant du corps 1 et qui sont reliées deux à deux par des surfaces tronconiques 101d et 101e.

L'élément mâle B est destiné à être introduit dans l'élément femelle A dans le sens de la flèche F₄ à la figure 2. Pour obtenir un guidage efficace des éléments mâle et femelle le long de leur axe d'emmanchement X-X' qui est confondu avec les axes X_{A}-X'_{A} et X_{B}-X'_{B} alors superposés, le corps 1 est pourvu d'une surface tronconique 18a qui est formée au voisinage de la butée 18 et destinée à guider l'arête 114 pour la centrer par rapport à l'axe X_{A}-X'_{A} et lui permettre de glisser sur une surface cylindrique à section circulaire 18b qui est centrée sur l'axe X_{A}-X'_{A}, qui prolonge la surface 18a et dont le rayon est très légèrement supérieur à celui de la surface 113. L'interaction des zones 18a et 18b d'une part, 113 et 114 d'autre part permet donc un guidage de l'extrémité avant de l'élément B lors de son introduction dans l'élément A.

En outre, la surface circulaire 19 qui définit l'ouverture 16a a un rayon sensiblement égal à celui de la surface radiale externe 115b de la collerette 115 et à celui de la surface 101b, ce qui permet d'obtenir un guidage de l'élément mâle par rapport à l'élément femelle lorsque la collerette 115 passe dans l'ouverture 16a et lorsque la partie du corps 101 entourée par la surface 101b est dans cette ouverture, comme représenté à la figure 3.

Comme il ressort plus particulièrement de la figure 2, le mouvement d'introduction de l'élément B dans l'élément A a pour effet d'amener en appui surfacique les surfaces 116 et 126 contre les surfaces 26 et 46. Si l'on poursuit le mouvement d'emmanchement pour atteindre la configuration de la figure 3, le clapet 2 est repoussé par la face avant 116 du corps 101, alors que le clapet 102 est repoussé par la tête 41 du poussoir 4, ce qui permet de décoller les clapets 2 et 102 de leurs sièges respectifs 12 et 112 et autorise l'écoulement de fluide sous pression, comme représenté par les flèches E à la figure 3.

Pour atteindre cette configuration, la surface inclinée 113c de la collerette 115 a repoussé la dent 72 à l'encontre de l'effort F₂ en glissant sur sa surface inclinée 72c, puis la collerette 115 s'est verrouillée en arrière de la dent 72, comme représenté sur cette même figure 3.

Lors de l'emmanchement de l'élément mâle B dans l'élément femelle A, la partie avant du corps 101 vient, par sa face avant plane 116-126, au contact de la face plane 26-46 de l'élément femelle. La poursuite de l'emmanchement induit le passage de la collerette 115 dans l'ouverture 16a puis le glissement de la surface radiale externe 115b de collerette 115 sur la partie inférieure de la surface 71. Ensuite, la partie du corps 101 délimitée par la surface 101b pénètre dans l'ouverture 16a. A partir de la position de la figure 2, la poursuite de l'emmanchement induit également un glissement de la surface 113 sur la surface 18b. Ainsi, un guidage efficace est obtenu lors de l'emmanchement des éléments A et B.

Lorsqu'il convient de désaccoupler les éléments du raccord, il suffit d'exercer sur le bouton 7 un effort F₅ dirigé vers le fond 17a, ce qui a pour effet d'effacer la dent 72 par rapport à la collerette 115, le clapet 102 étant alors repoussé par l'effort F₁ et par la pression du fluide, ce qui induit une fermeture de l'élément femelle par retour du clapet 2 vers sa position de la figure 1 et une fermeture de l'élément mâle par recul de son corps 101, ce qui correspond à un retour du clapet 102 vers le siège 112.

L'invention peut être mise en oeuvre pour la constitution d'un circuit de circulation de fluide caloporteur dans le sens de la flèche E à la figure 3, ou en sens inverse, en vue du refroidissement d'appareillages électriques ou électroniques. En effet, grâce à l'invention, le dispositif de manoeuvre formé par le bouton 7 peut être de taille relativement modeste, de même que les corps 1 et 101, ce qui permet de réaliser des éléments de raccord A et B de faible encombrement qui peuvent être produits en grand nombre pour créer des systèmes de refroidissement d'armoires électriques, notamment pour des serveurs informatiques.

L'invention a été représentée lors de sa mise en oeuvre dans un raccord dont les clapets et les parties fixes associées forment, lorsque les éléments mâle et femelle sont séparés, des faces planes 26-46 et 116-126 qui sont ménagées, pour l'une, dans l'élément femelle et, pour l'autre, dans l'élément mâle et sont perpendiculaires aux axes X_{A}-X'_{A}, X_{B}-X'_{B} et X-X'. Ceci s'avère particulièrement avantageux car l'emprisonnement de fluide est éliminé lors de l'emmanchement.

## Revendications

1. Raccord rapide pour la jonction amovible de deux canalisations parcourues par un fluide sous pression, ledit raccord comprenant deux éléments mâle et femelle aptes à s'emmancher axialement l'un dans l'autre et comprenant chacun un corps à l'intérieur duquel est mobile un clapet, une partie fixe de chaque élément étant apte à déplacer le clapet mobile de l'autre élément lors de l'emmanchement desdits éléments, **caractérisé en ce que** ledit élément femelle (A) est pourvu d'un organe (7) dans lequel est apte à être introduite une partie dudit élément mâle (B) et qui est mobile en translation (F₃) selon une direction (Y-Y') radiale par rapport à l'axe d'emmanchement (X-X') desdits éléments, entre une première position dans laquelle ledit organe autorise la séparation desdits éléments et une seconde position où ledit organe s'oppose à un retrait de l'élément mâle hors de l'élément femelle, **en ce que**, lorsque lesdits éléments (A, B) sont séparés, leur partie fixe (41, 101) et leur clapet mobile (2 ; 102) respectifs définissent ensemble, respectivement dans l'élément mâle et dans l'élément femelle, des volumes complémentaires dont les surfaces en regard (26-46, 116-126) sont aptes à être en appui surfacique l'une sur l'autre et **en ce que** lesdites surfaces (26-46, 116-126) sont planes et globalement perpendiculaires à un axe longitudinal (X_{A}-X'_{A}, X_{B}-X'_{B}) de l'élément correspondant et à l'axe d'emmanchement (X-X') desdits éléments (A,B)

2. Raccord selon la revendication 1, **caractérisé en ce que** le corps (1) de l'élément femelle (A) forme, de part et d'autre dudit organe (7) selon l'axe d'emmanchement (X-X') desdits éléments (A, B), deux zones (18a, 18b, 19) de guidage aptes à interagir simultanément avec deux parties (101b, 113-115) dudit élément mâle (B) pour le guidage axial relatif desdits éléments mâle et femelle lors de leur emmanchement.

3. Raccord selon l'une des revendications précédentes, **caractérisé en ce que** le clapet (2) dudit élément femelle (A) est centré sur la tête (41) d'un poussoir (4) fixe par rapport au corps (1) dudit élément femelle, alors que le clapet (102) dudit élément mâle (B) est disposé dans le corps (101) dudit élément mâle, une surface avant (116) du corps (101) dudit élément mâle étant apte à venir en appui surfacique contre une surface (26) du clapet (2) dudit élément femelle orientée vers un orifice (16a) d'introduction dudit élément mâle dans ledit élément femelle, alors qu'une surface (46) de ladite tête également orientée vers ledit orifice venant en appui surfacique contre une surface avant (126) du clapet (102) dudit élément mâle.

4. Raccord selon l'une des revendications précédentes, **caractérisé en ce que** ledit organe (7) est disposé dans un logement (17) ménagé dans le corps (1) de l'élément femelle (A) et débouchant sur la surface radiale externe dudit corps.

5. Raccord selon l'une des revendications précédentes, **caractérisé en ce que** ledit élément mâle (B) est pourvu d'au moins un relief (115) apte à coopérer avec au moins un relief (72) de forme complémentaire porté par ledit organe (7) pour le blocage desdits éléments en configuration accouplée.

6. Raccord selon la revendication 5, **caractérisé en ce que** ledit relief de l'élément mâle (B) est une collerette (115) radiale externe par rapport au corps principal (101) dudit élément.

7. Raccord selon l'une des revendications 5 ou 6, **caractérisé en ce que** ledit relief porté par ledit organe (7) est une dent (72) ménagée sur une surface radiale interne (71) dudit organe.

8. Raccord selon l'une des revendications précédentes, **caractérisé en ce qu'**il comprend des moyens (8) de charge élastique (F₂) dudit organe (7) vers ladite seconde position.

9. Utilisation d'au moins un raccord (1-115) selon l'une des revendications précédentes pour la création d'un circuit de circulation (E) de fluide caloporteur en vue du refroidissement d'appareillages électriques ou électroniques.

## Claims

1. Quick connection for removably joining two pipes through which a fluid under pressure passes, said connection being constituted by two elements, male and female, adapted to fit axially in each other and each comprising a body inside which a valve is mobile, a fixed part of each element being adapted to displace the mobile valve of the other element when said elements are being fitted, **characterized in that** said female element (A) is provided with a member (7) in which may be introduced a part of said male element (B) and which is mobile in translation (F₃) in a radial direction (Y-Y') with respect to the axis of fit (X-X') of said elements, between a first position in which said member allows the separation of said elements, and a second position where said member opposes a withdrawal of the male element from the female element, and **in that**, when said elements (A, B) are separated, their respective fixed part (41, 101) and mobile valve (2; 102) together define, respectively in the male element and in the female element, complementary volumes of which the opposite surfaces (26-46; 116-126) are capable of being in surface abutment on each other and **in that** said surfaces (26-46, 116-126) are planar and substantially perpendicular to a longitudinal axis (X_{A}-X'_{A}, X_{B}-X'_{B}) of the corresponding element and to the axis of fit (X-X') of said elements (A, B).

2. Connection according to Claim 1, **characterized in that** the body (1) of the female element (A) forms, on either side of said member (7) along the axis of fit (X-X') of said elements (A, B), two guiding zones (18a, 18b, 19) adapted to interact simultaneously with two parts (101b, 113-115) of said male element (B) for the relative axial guiding of said male and female elements when they are fitted together.

3. Connection according to one of the preceding Claims, **characterized in that** the valve (2) of said female element (A) is centred on the head (41) of a pusher element (4) fixed with respect to the body (1) of said female element, while the valve (102) of said male element (B) is disposed in the body (101) of said male element, a front surface (116) of the body (101) of said male element being adapted to come into surface abutment against a surface (26) of the valve (2) of said female element oriented towards an orifice (16a) for introduction of said male element in said female element, while a surface (46) of said head likewise oriented towards said orifice comes into surface abutment against a front surface (126) of the valve (102) of said male element.

4. Connection according to one of the preceding Claims, **characterized in that** said member (7) is disposed in a housing (17) made in the body (1) of the female element (A) and opening out on the outer radial surface of said body.

5. Connection according to one of the preceding Claims, **characterized in that** said male element (B) is provided with at least one element in relief (115) adapted to cooperate with at least one element in relief (72) of complementary shape borne by said member (7) for blocking said elements in coupled configuration.

6. Connection according to Claim 5, **characterized in that** said element in relief of the male element (13) is a radial flange (115) external with respect to the principal body (101) of said element.

7. Connection according to one of Claims 5 or 6, **characterized in that** said element in relief borne by said member (7) is a tooth (72) made on an inner radial surface (71) of said member.

8. Connection according to one of the preceding Claims, **characterized in that** it comprises means (8) for elastically loading (F₂) said member (7) towards said second position.

9. Use of at least one connection (1-115) according to one of the preceding Claims, for the creation of a circuit for circulation (E) of heat-exchange fluid with a view to cooling electrical or electronic equipment.

## Patentansprüche

1. Schnellkupplung für die lösbare Verbindung von zwei Leitungen, die von einem unter Druck stehenden Fluid durchströmt werden, wobei die Kupplung ein Einsteckelement und ein Aufnahmeelement umfasst, die geeignet sind, axial ineinander gesteckt zu werden und die jeweils einen Körper umfassen, in dessen Innerem ein Ventil beweglich ist, wobei ein feststehendes Teil jedes Elements geeignet ist, das bewegliche Ventil des anderen Elements bei dem Ineinanderstecken der Elemente zu verschieben, **dadurch gekennzeichnet, dass** das Aufnahmeelement (A) mit einem Organ (7) versehen ist, in das ein Teil des Einsteckelements (B) eingesteckt werden kann und das translatorisch (F₃) gemäß einer in Bezug auf die Einsteckachse (X-X') der Elemente radialen Richtung (Y-Y') zwischen einer ersten Position, in der das Organ die Trennung der Elemente zulässt, und einer zweiten Position, in der das Organ sich gegen ein Herausziehen des Einsteckelements aus dem Aufnahmeelement entgegenstellt, beweglich ist, dass, wenn die Elemente (A, B) getrennt sind, ihr jeweiliges feststehendes Teil (41, 101) und ihr bewegliches Ventil (2; 102) zusammen jeweils in dem Einsteckelement und in dem Aufnahmeelement komplementäre Volumen bilden, deren gegenüberstehende Flächen (26-46, 116-126) geeignet sind, in gegenseitige Flächenauflage zu kommen, und dass die Flächen (26-46, 116-126) eben und im Wesentlichen senkrecht zu einer Längsachse (X,-X'_{A}, X_{B}-X'_{B}) des korrespondierenden Elements und zur Achse (X-X') des Ineinandersteckens der Elemente (A, B) sind.

2. Kupplung nach Anspruch 1, **dadurch gekennzeichnet, dass** der Körper (1) des Aufnahmeelements (A) beidseitig des Organs (7) gemäß der Achse des Ineinandersteckens (X-X') der Elemente (A, B) zwei Zonen (18a, 18b, 19) der Führung bildet, die geeignet sind, gleichzeitig mit zwei Bereichen (101b, 113-115) des Einsteckelements (B) für die axiale relative Führung des Einsteckelements und des Aufnahmeelements bei ihrem Ineinanderstecken zusammenzuwirken.

3. Kupplung nach einem der vorhergehenden Ansprüche, **dadurch gekennzeichnet, dass** das Ventil (2) des Aufnahmeelements (A) zu dem Kopf (41) eines Stößels (4) zentriert ist, der in Bezug auf den Körper (1) des Aufnahmeelements feststehend ist, während das Ventil (102) des Einsteckelements (B) in dem Körper (101) des Einsteckelements angeordnet ist, wobei eine vordere Fläche (116) des Körpers (101) des Einsteckelements geeignet ist, in Flächenauflage gegen eine Fläche (26) des Ventils (2) des Aufnahmeelements zu kommen, die zu der Öffnung (16a) des Einsteckens des Einsteckelements in das Aufnahmeelement gerichtet ist, wobei eine ebenfalls zu der Öffnung gerichtete Fläche (46) des Kopfes In Flächenauflage gegen eine vordere Fläche (126) des Ventils (102) des Einsteckelements kommt.

4. Kupplung nach einem der vorhergehenden Ansprüche, **dadurch gekennzeichnet, dass** das Organ (7) in einem Aufnahmeraum (17) angeordnet ist, der in den Körper (1) des Aufnahmeelements (A) eingearbeitet ist und an der radialen Außenfläche des Körpers mündet.

5. Kupplung nach einem der vorhergehenden Ansprüche, **dadurch gekennzeichnet, dass** das Einsteckelement (B) mit mindestens einem Relief (115) versehen ist, das geeignet ist, mit mindestens einem Relief (72) komplementärer Form, das von dem Organ (7) getragen wird, für die Blockierung der Elemente in gekuppelter Konfiguration zusammenzuarbeiten.

6. Kupplung nach Anspruch 5, **dadurch gekennzeichnet, dass** das Relief des Einsteckelements (B) ein in Bezug auf den Hauptkörper (101) des Elements radialer äußerer Kragenring (115) ist.

7. Kupplung nach einem der Ansprüche 5 oder 6, **dadurch gekennzeichnet, dass** das von dem Organ (7) getragene Relief ein Zahn (72) ist, der auf der radialen inneren Fläche (71) des Organs angebracht ist.

8. Kupplung nach einem der vorhergehenden Ansprüche, **dadurch gekennzeichnet, dass** sie Mittel (8) zur elastischen Vorspannung (F₂) des Organs (7) in die zweite Position umfasst.

9. Verwendung von mindestens einer Kupplung (1-115) nach einem der vorhergehenden Ansprüche für die Erzeugung eines Kreises für die Zirkulation (E) eines Kühlmittels in Hinblick der Kühlung von elektrischen oder elektronischen Geräteanordnungen.
